# FASCICULE DE BREVET EUROPEEN

(11) **EP 2 915 093 B1**
(45) Date de publication et mention de la délivrance du brevet: **01.03.2017**
(21) Numéro de dépôt: 13783573.2
(22) Date de dépôt: 28.10.2013
(51) Int. Cl.: H01R 13/6585, G06K 7/00

(54) **CONNECTEUR DE CARTE À MÉMOIRE SÉCURISÉ**
SICHERER VERBINDER FÜR EINE SPEICHERKARTE
SECURE CONNECTOR FOR A MEMORY CARD

(30) Priorité: 30.10.2012 FR 1260361
(43) Date de publication de la demande: 09.09.2015
(73) Titulaire: Ingenico Group, 75015 Paris (FR)
(72) Inventeur: PAVAGEAU, Stéphane, F-26600 La Roche de Glun (FR)
(74) Mandataire: Vidon Brevets & Stratégie
(86) Numéro de dépôt international: PCT/EP2013/072529
(87) Numéro de publication internationale: WO 2014/067906

(56) Documents cités:
- EP-A1- 2 241 997
- DE-B3-102009 026 466
- US-A- 5 653 610

## Description

### 1. Domaine de l'invention

L'invention se situe dans le domaine des lecteurs de carte à mémoire. L'invention a plus particulièrement comme objet un lecteur de carte à mémoire destiné à être inséré dans un terminal de lecture de cartes à mémoire. Un tel terminal peut être un terminal de paiement, un terminal d'identification. Plus généralement, l'invention se rapporte à tout type de terminal pouvant comprendre un lecteur de carte à mémoire.

### 2. Art Antérieur

Les terminaux de lecture de cartes à mémoire comprennent, outre un lecteur de cartes à mémoires, un certain nombre de composants tels qu'un clavier, un écran, un ou plusieurs processeurs, de la mémoire, une source d'alimentation électrique. Depuis plusieurs années, les terminaux de lecture de cartes à mémoire ont vu leurs fonctions être multipliées. Ceci est particulièrement vrai pour les terminaux de paiement. Outre la fonction de paiement, les terminaux embarquent des fonctions de communication en réseau, des fonctions de détection de cartes à mémoire sans contact (cartes « contactless »), des fonctions de gestion de coupons (par exemple des coupons de fidélité), etc.

En plus de la multiplication de telles fonctions auxiliaires, les terminaux de lecture de cartes à mémoire doivent en plus être résistants aux diverses attaques ou tentatives de fraudes dont ils font fréquemment l'objet. Afin d'obtenir une homogénéité de la résistance des terminaux aux attaques, des normes internationales ont été édictée. Dans le domaine du paiement, par exemple, la norme PCI PED (« Payment Card Industry - Pin Entry Device) édicte des exigences en matière d'intrusion et de détection des tentatives d'attaques sur les terminaux. Il ne s'agit pas de la seule norme en vigueur.

Cependant, du fait de ces normes, les terminaux qui étaient antérieurement peu protégés laissent progressivement la place à des terminaux de plus en plus sécurisés. Parmi les points de sécurisation des terminaux, les industriels du secteur veillent plus particulièrement à la protection du lecteur de carte à mémoire. Le lecteur de carte à mémoire, en effet, reste un maillon faible du terminal de lecture de carte à mémoire. Ceci est dû au fait que le lecteur de carte à mémoire comprend une fente d'insertion de la carte à mémoire, cette fente rendant l'intérieur du terminal accessible depuis l'extérieur. Plus particulièrement, des attaquants cherchent à se procurer un accès au connecteur de carte à mémoire. Le connecteur de carte à mémoire est la partie du lecteur de carte à mémoire qui entre en contact avec la puce ou le microprocesseur embarqué sur la carte à mémoire. Lorsqu'un attaquant parvient à avoir accès à ce connecteur de carte à mémoire sans que quiconque s'en aperçoive, il est alors possible d'intercepter et de lire les données qui sont échangées entre la puce ou le microprocesseur de la carte et le processeur du terminal de lecture de carte à mémoire. Parmi les données interceptées, on peut notamment citer le code secret saisi par le client lors de la demande de code secret, qui peut être véhiculé sans cryptage, sur certaines cartes à puce.

Ceci explique que de nombreux efforts ont été portés à la sécurisation du lecteur de carte à mémoire. Ainsi, par exemple, les lecteurs de carte à mémoire ont été pourvus d'une protection avec treillis. Cette protection permet d'éviter une introduction par perçage du terminal. Lorsqu'un objet tente de pénétrer dans l'enceinte de protection, un court-circuit est produit entraînant alors une mise hors service du terminal.

Par ailleurs, des modifications visant à protéger les connecteurs de carte à mémoire contre les décharges électrostatiques et contre l'usure ont également été proposées. Il s'agit *par exemple* de disposer, à l'entrée du lecteur de carte à mémoire, de pièces métalliques assurant le guidage mécanique (prévention contre l'usure) et/ou la décharge de la carte préalablement à son insertion dans le lecteur de carte à mémoire. Communément, ces pièces métalliques se présentent sous la forme de tiges métalliques de guidage de quelques millimètres de hauteur. Un autre exemple consiste à ajouter des pièces métalliques qui se présentent sous la forme d'un peigne de décharge de la carte.

Toutes ces modifications ont entrainé une complexité de fabrication importante. Par ailleurs, le coût de fabrication a également augmenté. Actuellement, les exigences normatives en matière de sécurité sont telles qu'il est nécessaire de prévoir, pour la fabrication d'un terminal de lecture, de nombreuses étapes qui mêlent à la fois les soudures échelonnées de composants, la nécessité de disposer de composants résistants à la refusion, etc. Outre la complexité de fabrication du terminal de lecteur de carte à mémoire, ces procédés rendent la maintenance des terminaux produits très complexe voire impossible, suscitant ainsi bien des difficultés pour les prestataires de services de maintenance autant que pour le fabricant du terminal de lecture de carte à mémoire.

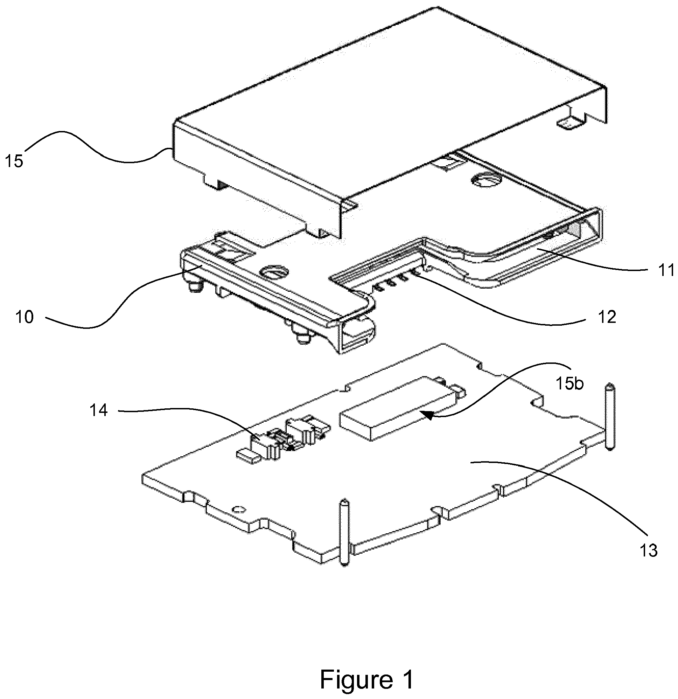

On décrit, en relation avec la figure 1, un assemblage classique d'un lecteur de carte à mémoire. Ce lecteur de carte à mémoire comprend un corps de lecteur de carte à mémoire 10, comprenant une fente d'insertion d'une carte à mémoire 11. Le connecteur de carte à mémoire est directement intégré au sein du lecteur de carte à mémoire. Il comprend des pins 12 de connexion au circuit imprimé (PCB) 13 (vue partielle). Le PCB 13 comprend également des composants électroniques 14. Pour protéger le lecteur de cartes à mémoire 10, celui-ci est recouvert d'une protection complète 15, ainsi que d'une protection frontale 15b.

US5653610 décrit un connecteur de carte à puce selon la préambule de la revendication 1.

Il existe donc un besoin de fournir une architecture de lecteur de carte à mémoire qui soit intrinsèquement sécurisée et ne nécessite pas de protection complémentaire..

### 3. Résumé de l'invention

L'invention se rapporte à un connecteur à mémoire selon la revendication 1.

Selon une caractéristique particulière, ladite enceinte est une pièce métallique adjointe audit socle.

Selon une caractéristique particulière, ladite zone de protection est conformée pour permettre le positionnement d'au moins un composant électronique.

Selon une caractéristique particulière, ladite enceinte est soudée à un PCB de façon simultanée audit connecteur.

Selon une caractéristique particulière, un corps de lecteur de carte à mémoire complémentaire dudit connecteur de carte à mémoire est fixé par une vis à un PCB de destination, par l'intermédiaire d'une pièce métallique dudit connecteur carte à mémoire.

Selon une caractéristique particulière, ledit connecteur de carte à mémoire comprend en outre une zone de contre appui d'une carte à mémoire.

Cette zone de contre-appui est une zone de contre appui vertical.

Selon une caractéristique particulière, ladite zone de contre appui d'une carte à mémoire comprend une lame ressort métallique de détection de présence de carte à mémoire.

Selon une caractéristique particulière, ledit connecteur de carte à mémoire comprend au moins un orifice de centrage qui est utilisé en conjonction avec un plot de centrage d'un corps du lecteur de carte à mémoire.

L'invention se rapporte également à un terminal de lecture de carte à mémoire. Selon l'invention, un tel terminal comprend un connecteur de carte à mémoire tel que décrit préalablement.

### 4. Figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1, déjà présenté, expose l'architecture classique d'un lecteur de carte à mémoire.
- La figure 2 illustre le principe général de l'invention à savoir la séparation en deux unités fonctionnelles distinctes du connecteur de carte à mémoire et du corps du lecteur de carte à mémoire ;
- les figures 3 et 4 illustrent un mode de réalisation de l'invention dans lequel le corps du lecteur de carte à mémoire comprend une piste de détection d'intrusion ;
- la figure 5 illustre un système dans lequel le corps du lecteur de carte à mémoire prend place.

### 5. Description détaillée

### 5.1. Rappel du principe de l'invention.

Le principe général de l'invention consiste à proposer une architecture de lecteur de carte à mémoire qui intègre directement les contraintes fonctionnelles inhérentes au fonctionnement de ce type de dispositif. Plus particulièrement, le principe général de l'invention consiste à découper le lecteur de carte à mémoire en deux parties distinctes : une première partie par laquelle transitent les signaux de cartes à mémoire, ainsi que le switch de détection de présence carte, et pouvant assurer une partie résiduelle de la décharge électrostatique (il s'agit du connecteur de carte à mémoire) et une deuxième partie permettant l'insertion de la carte à mémoire, assurant d'une part le guidage et les reprises d'effort de la carte à mémoire, d'autre part une partie de la décharge électrostatique de la carte, et aussi une protection des signaux échangés entre la carte à mémoire et le connecteur de carte à mémoire.(il s'agit du corps du lecteur de carte à mémoire proprement dit). Dans le cadre de cette divulgation, le connecteur de carte à mémoire est spécialement adapté pour augmenter la sécurité du lecteur de carte à mémoire ainsi constitué.

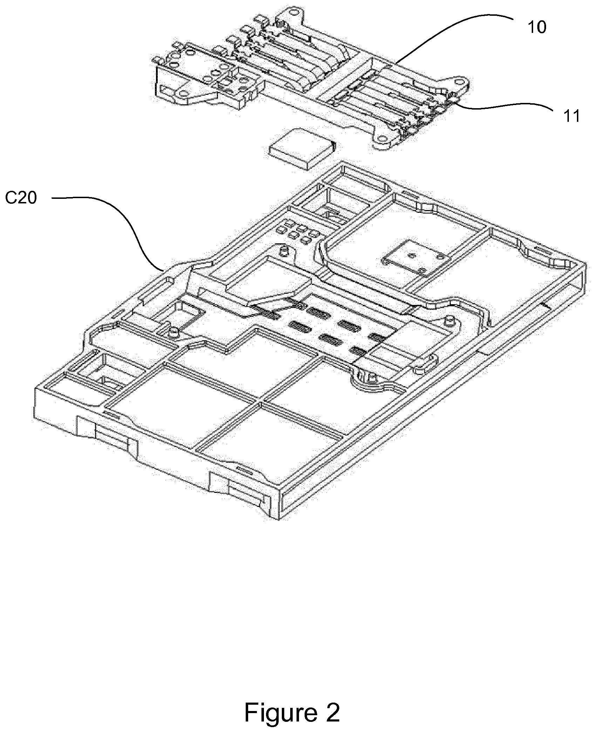

Le principe général de l'invention est décrit en relation avec la figure 2. Selon l'invention, un connecteur de carte à mémoire 10 est construit indépendamment d'un corps du lecteur de carte à mémoire C20. Le connecteur de carte à mémoire 10 est conçu afin de permettre une lecture des signaux émanant de la carte à mémoire (non représentée). Dans la figure 1, le connecteur de carte à mémoire 10 est conçu pour la lecture d'une carte à puce. Pour ce faire, le connecteur de carte à mémoire 10 comprend un certain nombre de pins 11 (huit sur la figure 2), permettant d'entrer en contact avec des zones correspondantes de la carte à mémoire (six ou huit zones en fonction de la carte à mémoire). Les pins 11 sont en général des lames ressort métalliques qui se positionnent sur la surface de la puce.

Selon l'invention ce connecteur de carte à mémoire 10 est indépendant du corps du lecteur de carte à mémoire C20. Cela signifie que contrairement aux systèmes de l'art antérieur, le connecteur de carte à mémoire 10 n'est pas assemblé avec le corps du lecteur de carte à mémoire C20 avant d'être assemblé au PCB du terminal de lecture. Or non seulement cet assemblage est complexe et couteux mais en outre il est sujet à des défauts et pose des problèmes de résistance mécanique. Au contraire, l'invention propose de fixer le connecteur de carte à mémoire 10 en premier sur le PCB, puis ensuite de fixer le corps du lecteur de carte à mémoire C20 par-dessus le connecteur. En d'autres termes, on comprend que cet assemblage n'est pas du tout de même nature que l'assemblage de l'art antérieur puisque le connecteur de carte à mémoire est recouvert par le corps du lecteur de cartes à mémoire qui vient en quelque sorte le protéger, soit de façon « sécurité » (présence de treillis), soit de façon « fonctionnelle » (présence de zone de décharge électrostatique).

De manière additionnelle, dans au moins un mode de réalisation, l'invention propose de supprimer le flexible de protection qui recouvre entièrement le lecteur de carte à mémoire. Dans un mode de réalisation, l'invention remplace ce flexible de protection par un dispositif de protection interne, i.e. qui se trouve à l'intérieur du corps lecteur de carte à mémoire C20 lui-même.

Par la suite, on décrit un mode de réalisation spécifique de l'invention. Il est entendu que ce mode de réalisation ne limite en rien la portée de l'invention. Plus particulièrement, dans d'autres modes de réalisation de l'invention il est possible d'augmenter le niveau de sécurité du connecteur de carte à mémoire en utilisant des moyens alternatifs à ceux divulgués ici, mais qui rempliront des fonctions analogues.

### 5.2. Description d'un mode de réalisation détaillé

Dans ce mode de réalisation de l'invention, une architecture spécifique du connecteur de carte à mémoire est proposée.

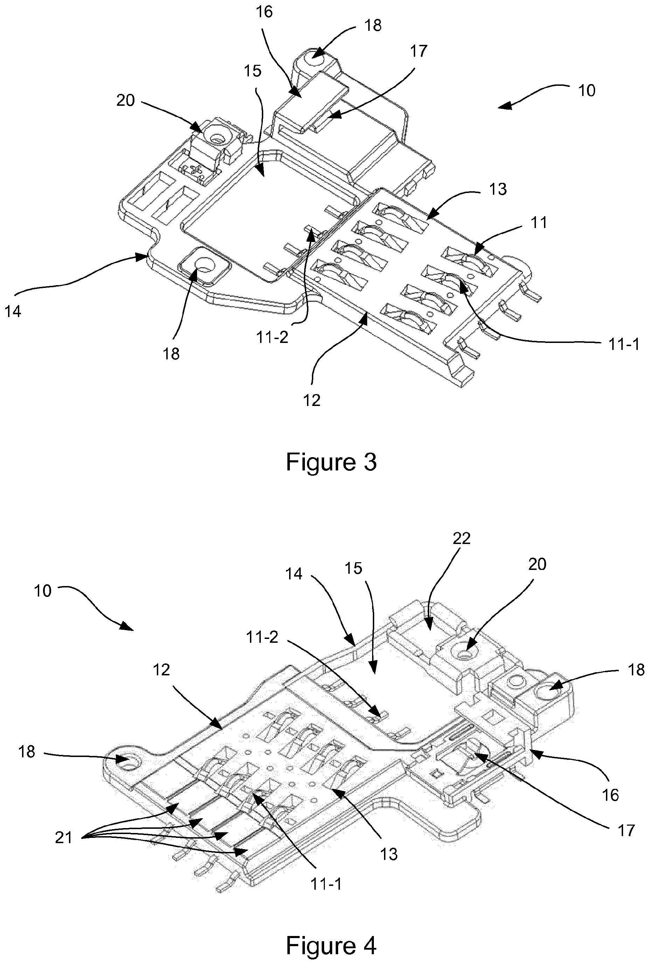

Ce mode de réalisation est présenté plus particulièrement en relation avec les figures 3 et 4 qui illustrent chacune deux modes de réalisation du connecteur de carte à mémoire objet de l'invention.

Plus particulièrement, dans ces modes de réalisation de l'invention, le connecteur de carte à mémoire 10 comprend un socle 12, de forme globalement parallélépipédique au sein duquel sont insérés des pins 11. Dans au moins un mode de réalisation, les pins sont formés d'une section de lame élastique longitudinale 11-1, cette section entrant en contact avec au moins une portion prédéterminée d'une puce de carte à mémoire. Cette mise en contact est effectuée par l'intermédiaire d'un orifice 13 sur le dessus du socle 12. Dans au moins un mode de réalisation, un pin comprend, dans le prolongement de la section de lame élastique longitudinale, une terminaison de contact 11-2. Cette terminaison de contact est destinée à être soudée sur une zone de contact du circuit imprimé. Cette terminaison de contact sort derrière le socle 12. Astucieusement, une terminaison de contact 11-2 d'un pin 11-1 donné sort du côté opposé à l'orifice auquel il se rapporte. Ceci s'explique par le fait que dans une carte à puce, seuls quelques contacts de la puce sont importants. Plus particulièrement, un seul contact de la puce échange des données. Il s'agit de ce que l'on appelle communément le *pin-IO*.(pour Input/Output) Le fait de faire ressortir la terminaison de contact de ce *pin-io* à l'opposé de l'orifice au sein duquel la lame élastique *« pin-IO »* est présente est intéressant en terme de sécurité : l'accès à la protubérance de contact du *pin-IO* est complexifié. Selon l'invention, la sécurité est encore renforcée au sein du connecteur par l'utilisation d'une enceinte 14 laquelle forme une barrière continue qui s'étend sur l'arrière du socle 12.

Cette enceinte 14 permet de définir une zone de protection 15 qui comprend les terminaisons de contact 11-2, dont la terminaison de contact « pin-IO ». Avantageusement, cette zone de protection est également utilisée pour le positionnement, sur le PCB, de composants électroniques sensibles. Le dimensionnement de l'enceinte influe directement que la surface disponible pour pouvoir intégrer des composants électroniques. En effet, il convient de rappeler que le connecteur de carte à mémoire 10 est recouvert par un corps du lecteur de carte à mémoire C20 (voir figure 2). Or cette couverture est sécurisée par l'utilisation d'un treillis de protection sur la surface interne du corps du lecteur de carte à mémoire. En d'autres termes, une fois recouverte par le corps du lecteur de carte à mémoire, la zone de protection 15 est protégée, par le treillis de protection 14 sur le dessus et sur le côté, et renforcé sur chaque côté par l'enceinte de protection 14. Ainsi, on dispose d'une zone de protection 15 quasiment inviolable.

Dans un mode de réalisation (figure 4), cette enceinte est en métal, soudée de manière simultanée au connecteur de carte à mémoire.

Dans au moins un mode de réalisation, le connecteur de carte à mémoire 10 comprend en outre une zone de contre appui 16. Cette zone de contre appui 16 remplit deux fonctions : la première est de permettre l'adaptation à l'épaisseur de la carte. En effet, le montage tel que proposé entraine une certaine tolérance quant à la hauteur du corps de lecteur de carte à mémoire par rapport au connecteur de carte à mémoire. Cette zone de contre appui permet de gérer cette légère différence de hauteur en assurant que la carte ne sera pas déviée lors de son introduction. La deuxième fonction est de détecter l'insertion complète de la carte (système de switch). Cette deuxième fonction est remplie par l'utilisation d'une lame ressort métallique 17 incluse dans la zone de contre appui. Cette lame ressort métallique 17 est connecté au processeur du terminal de paiement par l'intermédiaire d'une soudure réalisée sur le circuit imprimé (PCB). Lorsque le contact est établi, cela signifie que la carte est complètement insérée dans le lecteur. Cela permet d'activer les pins 11 du connecteur (ainsi, tant que la carte n'est pas complètement insérée, les pins du connecteur ne sont pas mis sous tension). Cela présente deux avantages : le premier est que cela limite les possibilités de fraude, puisqu'il n'est pas possible de simuler l'introduction d'une carte dans le lecteur ; le deuxième est que cela évite de griller le terminal avec une carte non déchargée, car lorsque la carte est arrivée en butée de la zone de contre appui, elle est complètement déchargée (pas d'ESD) et ensuite on active les pins.
- La butée de la carte, en tant que telle, n'est pas réalisée par le connecteur, mais par le corps du lecteur. En effet, les terminaisons soudés en soudure refusion CMS (« Composants Montés en Surface) n'ont pas la résistance suffisante pour assure la tenue sur des milliers voire centaines de milliers de cycles. D'où la présence des centreurs sur le connecteur, afin que l'assemblage connecteur/corps de lecteur soit plus résistant ;
- la butée est faite par le corps du lecteur ;
- Le maintien mécanique du connecteur est partiellement assuré par les terminaisons de contact soudées sur la carte.

Le switch de détection du lecteur suit les règles de l'art connues dans les connecteurs de carte à puce (séquencement de la détection : le switch se déclenche avant l'arrivée en butée complète, et l'information de retrait carte arrive avant que les contacts de la carte à pouce quitte la zone de contact).

L'invention présente cependant une spécificité au niveau du switch: les terminaisons du switch sont tournées de 90°, ce qui permet de placer la pièce métallique à l'arrière, et de maintenir les terminaisons de contact visible lors de la soudure.

Dans les deux modes de réalisation présentés en relations avec les figures 3 et 4, les connecteurs comprennent en outre au moins un orifice de centrage 18 qui est utilisé en conjonction avec le corps du lecteur de carte à mémoire, qui comprend lui au moins un plot de centrage correspondant. L'orifice de centrage 18 est utilisé pour garantir un montage correct du lecteur de carte à mémoire et pour se prémunir d'un positionnement approximatif, et permettre en l'occurrence que la position de butée de fin de course carte à, mémoire soit définie de façon précise.

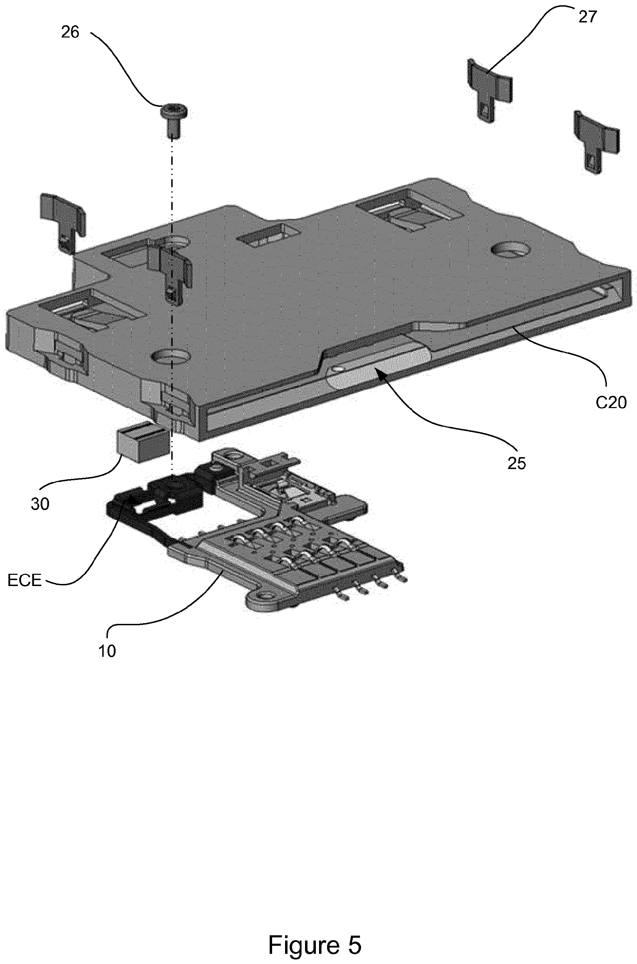

Dans les deux modes de réalisation présentés en relations avec les figures 3 et 4, les connecteurs comprennent également au moins un insert métallique 20. Cet insert métallique 20 permet l'ajout, de façon rigide vis-à-vis du PCB, d'une pièce complémentaire (cette pièce complémentaire étant le corps du connecteur de carte à mémoire), via une vis (référence 26, figure 5), laquelle assemble le connecteur de carte à mémoire avec le corps du lecteur de carte à mémoire. Cette vis 26 est vissée dans l'insert 20 qui est lui-même soudé ou collée au PCB (la ligne pointillée figure 5 représente l'axe d'insertion de la vis).

Cet insert est ajouté dans le connecteur de carte à mémoire dans le mode de réalisation de la figure 3. Dans le mode de réalisation de la figure 4, cet insert fait partie de l'enceinte 14, qui est elle-même métallique et est soudée (ou fixée) sur le PCB lui-même afin de garantir qu'il n'est pas possible de soulever cette enceinte (ou de soulever le connecteur de carte à mémoire). Cet insert métallique présente plusieurs avantages :
- Il est uniquement composé d'une tôle pliée, ce qui en terme de coût est très avantageux ;
- La forme spécifique de cet insert permet de gagner de la place sur le circuit, tout en ayant une force de tenue sur la carte importante, et rester compatible avec les processus de refusion actuels ;

- Dans un mode de réalisation particulier, cet insert peut sortir de la bande continue servant à réaliser les contacts. Son coût est alors totalement neutre (seul le coût de la vis est ajouté pour la fixation mécanique) ;
- Cet insert permet de connecter le corps du connecteur de carte à mémoire de façon sûre, en gardant en pression la pièce structurée contre le circuit électronique.
- Deux méthodes de montage sont envisageables : où l'insert est surmoulé, mais cela peut poser des problèmes de planéité, soit l'insert est clipsé flottant, et donc pas de problématique de planéité.

Concrètement, cet insert permet de remplacer l'écrou pour adjoindre la vis (voir figure 5), sans avoir à réaliser un trou dans le PCB (qui coute cher et qui est assez contraignant au niveau définition du PCB, car ce trou peut être situé en face d'une zone utile (une touche, par exemple) et sans adjoindre une pièce supplémentaire. On ne perd pas de surface à cause de l'orifice qui est normalement nécessaire à la vis. Comme on ne perd pas de surface, on peut mettre plus de composants et donc réduire la taille de l'ensemble.

### 5.3. Caractéristiques complémentaires

Outre les caractéristiques préalablement décrites, le connecteur de carte à mémoire tel que défini est constitué d'une matière dissipative, (type VECTRA A700 LCP). Ce connecteur peut alors comprendre une zone de décharge (dite zone ESD) permettant de réaliser une décharge de la carte à mémoire lorsque celle-ci est insérée dans le lecteur. Cette zone est notée 21 sur la figure 4. Il s'agit de formes locales, qui sont utilisées pour finir de décharger la carte à mémoire, avant contact avec le connecteur (plastique chargé). Les formes locales permettent d'avoir des contacts très localisés, et donc, par effet de pointe, de mieux décharger.

Par ailleurs, toujours dans le mode de réalisation de la figure 4, l'enceinte 14 comprend, une zone de positionnement 22 d'un connecteur élastomère, par exemple de type Zebra (Marque déposée). Ainsi, afin d'éviter la problématique de la soudure du treillis de protection (sur la face interne du corps du connecteur de carte à mémoire) sur le PCB, la connexion entre ces deux éléments est réalisée par l'intermédiaire d'un connecteur élastomère, par exemple de type Zebra (Marque déposée). Ainsi, il n'est pas nécessaire de disposer d'un mécanisme complexe de soudure du corps de lecteur de carte à mémoire sur le PCB : en effet, comme la connexion est assurée par l'intermédiaire d'un connecteur élastomère, le montage de l'ensemble connecteur de carte à mémoire, connecteur élastomère et corps de lecteur de carte à mémoire est facilité.

Plus généralement, pour faciliter le montage, les étapes suivantes sont mises en oeuvre :
- Une étape de fixation du connecteur de carte à mémoire sur le PCB. Cette fixation peut être réalisée par vissage ou par soudure ou par collage ou une combinaison de ces techniques. D'autres méthodes de fixation peuvent également être employées.
- Une étape de pose du connecteur élastomère (lorsqu'il est employé). Le positionnement du connecteur élastomère peut avantageusement être réalisé dans une zone laissée libre à cet effet au sein du connecteur de carte à mémoire.
- Une étape de pose et de fixation du corps du lecteur de carte à mémoire, avec un mode de fixation du corps du lecteur par rapport au PCB. Dans le cas d'un Zebra, une vis se prenant dans une partie du connecteur carte à mémoire est une solution avantageuse, ou encore l'ajout d'une cinquième PIN faisant office de maintien mécanique.

Ainsi, il ne faut que deux ou trois étapes pour assembler et fixer le lecteur de carte à mémoire sur le PCB.

### 5.4. Description d'un mode de réalisation d'un lecteur de carte à mémoire

Ce mode de réalisation est plus particulièrement décrit en relation avec la figure 5. Pour plus de simplicité, les références numériques qui ont été préalablement employées dans les figures 3 et 4 sont conservées. Dans ce mode de réalisation, le lecteur de carte à mémoire comprend un corps de lecteur de carte à mémoire C20, un connecteur de carte à mémoire 10 et un connecteur élastomère 30. Le connecteur de carte à mémoire 10 est architecturé de sorte qu'il comprenne un espace laissé libre ECE pour le positionnement du connecteur élastomère 30. Ainsi, lors de l'assemblage le connecteur de carte à mémoire 10 est d'abord fixé sur le PCB, puis le connecteur élastomère 30 est inséré dans l'espace ECE. Le corps du lecteur de carte à mémoire C20 est ensuite positionné par-dessus l'ensemble formé par le connecteur de carte à mémoire et le connecteur élastomère. Comme cela a déjà été mentionné, le corps du lecteur de carte à mémoire C20 comprend une zone de décharge de la carte 25. Le corps du lecteur de carte à mémoire C20 est fixé au PCB par l'intermédiaire d'une vis 26 (via le connecteur carte à mémoire) et de quatre pions d'ancrage 27. Ces pions d'ancrage ont une forme particulière, adaptée d'une part pour remplir une fonction de guidage de la carte à mémoire dans le lecteur et d'autre part pour réaliser, si besoin, une décharge électrostatique des arêtes de la carte insérée. La vis 26 est éventuellement soudée ou collée au PCB (la ligne pointillée figure 5 représente l'axe d'insertion de la vis). Il n'est donc pas nécessaire de prévoir un trou dans le PCB. Au minimum, la fixation du corps du lecteur de carte à mémoire C20 est assurée par la fixation ou la soudure du connecteur de carte à mémoire 10 sur le PCB, telle que décrite préalablement et l'adjonction de la vis de fixation entre le corps du lecteur de carte à mémoire C20 et le connecteur de carte à mémoire 10.

De plus, dans ce système, les centrages entre le connecteur de carte à mémoire et le corps du lecteur de carte à mémoire permettent de se positionner de façon rigoureuse.

En effet, dans ce mode de réalisation, le connecteur de carte à mémoire comprend au moins deux orifices de centrage. Les orifices de centrage sont configurés de sorte que des plots de centrage, qui sont intégrés au corps du lecteur de carte à mémoire, puissent prendre place dans ces orifices de centrage. Ainsi, dans ce mode de réalisation, il n'est pas possible de réaliser un mauvais montage du lecteur de carte à mémoire. Plus particulièrement, il n'est pas possible de placer le corps du lecteur de carte à mémoire avec un angle incorrect pas rapport au connecteur.

## Revendications

1. Connecteur de carte à mémoire 10, comprenant au moins un pin 11 pour la lecture d'une carte à mémoire, connecteur comprenant un socle 12 de forme parallélépipédique au sein duquel ledit au moins un pin 11 est positionné, ledit connecteur de carte à mémoire étant **caractérisé en ce qu'**il comprend une enceinte 14, s'étendant sur l'arrière dudit socle 12, et formant une barrière continue entre deux côtés dudit socle 12, ladite enceinte 14 définissant une zone de protection 15 qui comprend au moins une terminaison de contact 11-2 dudit au moins un pin 11.

2. Connecteur de carte à mémoire 10 selon la revendication 1, **caractérisé en ce que** ladite enceinte 14 est une pièce métallique adjointe audit socle 12.

3. Connecteur de carte à mémoire 10, selon la revendication 1, **caractérisé en ce que** ladite zone de protection 15 est conformée pour permettre le positionnement d'au moins un composant électronique.

4. Connecteur de carte à mémoire 10, selon la revendication 2, **caractérisé en ce que** ladite pièce métallique 14 est positionnée flottante en vertical par rapport audit socle, de sorte qu'elle permette un soudage simultané à un PCB de destination.

5. Connecteur de carte à mémoire, selon la revendication 1, **caractérisé en ce qu'**un corps de lecteur de carte à mémoire C20, complémentaire dudit connecteur de carte à mémoire 10, est fixé à un PCB de destination, par l'intermédiaire d'une pièce métallique 20 dudit connecteur carte à mémoire 10, ladite fixation étant opérée par l'intermédiaire d'une vis.

6. Connecteur de carte à mémoire 10, selon la revendication 1, **caractérisé en ce qu'**il comprend en outre une zone de contre appui 16 d'une carte à mémoire.

7. Connecteur de carte à mémoire 10, selon la revendication 6, **caractérisé en ce que** ladite zone de contre appui 16 d'une carte à mémoire comprend une lame ressort métallique 17 de détection de présence de carte à mémoire.

8. Connecteur de carte à mémoire 10, selon la revendication 1, **caractérisé en ce qu'**il comprend au moins un orifice de centrage 18 qui est utilisé en conjonction avec un plot de centrage d'un corps du lecteur de carte à mémoire

9. Terminal de lecture de carte à mémoire **caractérisé en ce qu'**il comprend un connecteur de carte à mémoire 10 selon l'une des revendications 1 à 8.

## Patentansprüche

1. Verbinder 10 für eine Speicherkarte, umfassend mindestens einen Stift 11 zum Lesen einer Speicherkarte, wobei der Verbinder einen Sockel 12 in der Form eines Parallelepipeds umfasst, in dem der mindestens eine Stift 11 positioniert ist, wobei der Verbinder für eine Speicherkarte **dadurch gekennzeichnet ist, dass** er ein Gehäuse 14 umfasst, das sich an der Rückseite des Sockels 12 erstreckt und eine kontinuierliche Barriere zwischen zwei Seiten des Sockels 12 bildet, wobei das Gehäuse 14 eine Schutzzone 15 definiert, die mindestens einen Kontaktanschluss 11-2 des mindestens einen Stifts 11 umfasst.

2. Verbinder 10 für eine Speicherkarte nach Anspruch 1, **dadurch gekennzeichnet, dass** das Gehäuse 14 ein dem Sockel 12 benachbartes Metallstück ist.

3. Verbinder 10 für eine Speicherkarte nach Anspruch 1, **dadurch gekennzeichnet, dass** die Schutzzone 15 ausgelegt ist, die Positionierung mindestens einer elektronischen Komponente zu gestatten.

4. Verbinder 10 für eine Speicherkarte nach Anspruch 2, **dadurch gekennzeichnet, dass** das Metallstück 14 vertikal schwebend in Bezug auf den Sockel derart positioniert ist, dass es ein gleichzeitiges Schweißen an eine Ziel-PCB gestattet.

5. Verbinder für eine Speicherkarte nach Anspruch 1, **dadurch gekennzeichnet, dass** ein Lesekörper C20 der Speicherkarte, komplementär zu dem Verbinder 10 für eine Speicherkarte, mit Hilfe eines Metallstücks 20 des Verbinders 10 für eine Speicherkarte an einer Ziel-PCB befestigt ist, wobei die Befestigung mit Hilfe einer Schraube vorgenommen wird.

6. Verbinder 10 für eine Speicherkarte nach Anspruch 1, **dadurch gekennzeichnet, dass** er außerdem eine Gegenhaltezone 16 für eine Speicherkarte umfasst.

7. Verbinder 10 für eine Speicherkarte nach Anspruch 6, **dadurch gekennzeichnet, dass** die Gegenhaltezone 16 für eine Speicherkarte ein metallisches Federblatt 17 zur Detektion des Vorliegens einer Speicherkarte umfasst.

8. Verbinder 10 für eine Speicherkarte nach Anspruch 1, **dadurch gekennzeichnet, dass** er mindestens eine Zentrierungsöffnung 18 umfasst, die in Verbindung mit einer Zentrierungssteckstelle eines Lesekörpers der Speicherkarte verwendet wird.

9. Leseanschluss für eine Speicherkarte, **dadurch gekennzeichnet, dass** er einen Verbinder 10 für eine Speicherkarte nach einem der Ansprüche 1 bis 8 umfasst.

## Claims

1. Memory card connector 10, comprising at least one pin 11 for the reading of a memory card, the connector comprising a parallelepiped-shaped base 12 within which said at least one pin 11 is positioned, said memory card connector being **characterised in that** it comprises an enclosure 14 extending rearwards from said base 12, and forming a continuous barrier between two sides of said base 12, said enclosure 14 defining a protection area 15 which comprises at least one contact termination 11-2 of said at least one pin 11.

2. Memory card connector 10 according to claim 1, **characterised in that** said enclosure 14 is a metal part adjoined to said base 12.

3. Memory card connector 10 according to claim 1, **characterised in that** said protection area 15 is shaped to enable positioning of at least one electronic component.

4. Memory card connector 10 according to claim 2, **characterised in that** said metal part 14 is positioned so as to be floating vertically relative to said base, so that it enables simultaneous soldering to a destination PCB.

5. Memory card connector according to claim 1, **characterised in that** a memory card reader body C20, complementary to said memory card connector 10, is fastened to a destination PCB, by means of a metal part 20 of said memory card connector 10, said fastening being made by a screw.

6. Memory card connector 10 according to claim 1, **characterised in that** it additionally comprises a counter-pressure area 16 of a memory card.

7. Memory card connector 10 according to claim 6, **characterised in that** said counter-pressure area 16 of a memory card comprises a metallic spring leaf 17 to detect the presence of a memory card.

8. Memory card connector 10 according to claim 1, **characterised in that** it comprises at least one centering hole 18 that is used in conjunction with a centering pad of a memory card reader body.

9. Memory card reader terminal **characterised in that** it comprises a memory card connector 10 according to one of claims 1 to 8.
